# EUROPEAN PATENT APPLICATION

(11) **EP 4 592 207 A1**
(43) Date of publication of application: **30.07.2025**
(21) Application number: 23954984.3
(22) Date of filing: 27.11.2023
(51) Int. Cl.: B65B 69/00, B32B 38/10, B32B 43/00, B65H 41/00, H01M 10/04, B65C 9/00

(54) **PEEL-OFF APPARATUS, BATTERY MANUFACTURING DEVICE, AND PEEL-OFF METHOD**

(30) Priority: 08.10.2023 CN 202311289905
(71) Applicant: Contemporary Amperex Technology (Hong Kong) Limited, Central (HK)
(72) Inventor: WANG, Lili, Ningde, Fujian 352100 (CN); QIU, Shiping, Ningde, Fujian 352100 (CN); LONG, Mingjin, Ningde, Fujian 352100 (CN); DU, Jiasong, Ningde, Fujian 352100 (CN); SUN, Yanlin, Ningde, Fujian 352100 (CN); LIU, Yang, Ningde, Fujian 352100 (CN); ZHAO, Bin, Ningde, Fujian 352100 (CN)
(74) Representative: Kraus & Lederer PartGmbB
(86) International application number: PCT/CN2023/134479
(87) International publication number: WO 2025/076938

(57) **Abstract**

A tearing apparatus (100), a battery manufacturing device, and a tearing method are disclosed. The tearing apparatus (100) includes a mounting bracket (10), a movement mechanism (20), and a clamping mechanism (30). The movement mechanism (20) includes a first movement assembly (21) and a second movement assembly (22). The first movement assembly (21) is arranged on the mounting bracket (10). The first movement assembly (21) is configured to drive the second movement assembly (22) to move along a first direction. The clamping mechanism (30) includes a connecting bracket (31) and a clamping assembly (32). The second movement assembly (22) is configured to drive the connecting bracket (31) to move along a second direction. The clamping assembly (32) is connected to the connecting bracket (31), and a clamping piece (321) of the clamping assembly (32) can move along a third direction. The clamping piece (321) is configured to clamp a target piece of a material (200) for tearing. The first direction, the second direction, and the third direction intersect with one another.

## Description

This application claims priority to Chinese Patent Application No. 202311289905.0, filed on October 8, 2023, which is incorporated herein by reference in its entirety.

### TECHNICAL FIELD

This application relates to the field of battery technologies, and in particular, to a tearing apparatus, a battery manufacturing device, and a tearing method.

### BACKGROUND

New energy batteries are increasingly widely used in life and industry. For example, new energy vehicles equipped with batteries have been widely used. In addition, batteries are increasingly used in the field of energy storage, and the like.

During manufacturing of a battery pack, a double-sided adhesive tape can be adhered to a surface of a battery cell through an automatic adhesive applicator. In the production process, two sides of the double-sided adhesive tape are usually covered with release paper, and the release paper needs to be torn off before the double-sided adhesive tape is adhered to the battery cell. However, a conventional tearing apparatus has the problems of complex structure, large occupied space, and high production costs.

### SUMMARY

To solve the above technical problems, this application provides a tearing apparatus, a battery manufacturing device, and a tearing method, which can alleviate the problems of complex structure, large occupied space, and high production costs.

This application is implemented in the following technical solutions.

A first aspect of this application provides a tearing apparatus, where the tearing apparatus includes:
a mounting bracket;
a movement mechanism, where the movement mechanism includes a first movement assembly and a second movement assembly, where the first movement assembly is arranged on the mounting bracket, and the first movement assembly is configured to drive the second movement assembly to move along a first direction; and
a clamping mechanism, where the clamping mechanism includes a connecting bracket and a clamping assembly, where the second movement assembly is configured to drive the connecting bracket to move along a second direction, the clamping assembly is connected to the connecting bracket, and a clamping piece of the clamping assembly can move along a third direction, and the clamping piece is configured to clamp a target piece of a material for tearing, where the first direction, the second direction, and the third direction intersect with one another; and
the clamping assembly is able to drive the clamping piece to move along a fourth direction relative to the connecting bracket, where a plane defined by the second direction and the third direction is parallel to the fourth direction, and the fourth direction is in oblique intersection with both the second direction and the third direction.

The tearing apparatus provided in the embodiments of this application is provided with the mounting bracket, the movement mechanism, and the clamping mechanism, where the movement mechanism is provided with the first movement assembly and the second movement assembly, the first movement assembly is controlled to drive the second movement assembly to move along the first direction, the second movement assembly drives the connecting bracket to move along the second direction, the clamping piece of the clamping assembly moves along the third direction, and the first direction, the second direction, and the third direction intersect with one another. A simple movement mechanism is arranged to control the movement track of the clamping piece and achieve tearing of the target piece of the material, so that the structure is simple, the occupied space is reduced, and the production costs are reduced. In addition, the first movement assembly and the second movement assembly cooperate, so that the clamping piece can move rapidly with large displacement in the first direction and the second direction; the clamping piece can be adjusted with small displacement in the third direction, so that accurate positioning can be realized on the premise of meeting the functions of positioning and tearing of the target piece; and the production efficiency can be further improved, and the occupied space can be further reduced.

In some embodiments, the first direction, the second direction, and the third direction are perpendicular to one another.

The clamping piece is arranged to move along the fourth direction relative to the connecting bracket, so that after the clamping piece fixes a tearing portion of release paper, the release paper can be torn off by controlling the clamping piece to move along the fourth direction in the process of tearing off the release paper. That is, the clamping piece is controlled to move along the fourth direction, in other words, the clamping piece is controlled to move obliquely upwards, the friction and/or adhesive force between the release paper and a heat insulation pad is thus reduced in the process of tearing off, which is conducive to tearing off the release paper and can avoid to some extent the occurrence of residue of the release paper, break of the tearing portion of the release paper, and the like caused by the incomplete tear-off of the release paper, thus improving the applicability of the tearing apparatus, that is, the tearing apparatus can also be configured to tear off thin and small release paper.

In some embodiments, the clamping assembly includes a first connecting piece connected to the connecting bracket and a first driving piece connected to the first connecting piece, where the first driving piece extends along the fourth direction, and the first driving piece is configured to drive the clamping piece to move along the fourth direction.

The first driving piece is arranged and extends along the fourth direction, so that the first driving piece makes telescopic movement in the extending direction thereof so as to drive the clamping piece to move, the movement of the clamping piece can be controlled, the operation is simplified, and the movement accuracy of the clamping piece is improved.

In some embodiments, the clamping assembly further includes a first mounting plate connected to the first driving piece, and a first slide rail and a second driving piece arranged on the first mounting plate, where the first driving piece is configured to drive the first mounting plate to move along the fourth direction, the first slide rail extends along the third direction, and the second driving piece is configured to drive the clamping piece to move along the first slide rail.

The clamping assembly is provided with the first slide rail and the second driving piece, and the first slide rail and the second driving piece are arranged on the first mounting plate. The first slide rail extends along the third direction, the clamping piece is slidably arranged on the first slide rail, and the second driving piece is configured to drive the clamping piece to move along the first slide rail. The structure is simple, movement of the clamping piece can be controlled, the operation is simplified, and the movement accuracy of the clamping piece is improved.

In some embodiments, the clamping assembly includes a plurality of clamping pieces.

The plurality of clamping pieces are arranged to tear release paper from a plurality of heat insulation pads simultaneously, and the device speed is improved, thereby improving the efficiency of tearing off the release paper and further improving the production efficiency. In addition, the plurality of clamping pieces are arranged, so as to adapt to both single-row battery cells and double-row battery cells.

In some embodiments, the clamping piece includes a clamping jaw and a third driving piece, where the third driving piece drives the clamping jaw to switch between a clamp state for clamping the target piece and a release state for releasing the target piece.

Thus, the structure is simple, and the reliability of the clamping piece is guaranteed.

In some embodiments, the clamping mechanism includes a fourth driving piece, the connecting bracket includes a second connecting piece connected to the second movement assembly and a second mounting plate connected to the second connecting piece, a bottom surface of the second mounting plate is provided with a second slide rail extending along the first direction, and the fourth driving piece is configured to drive the clamping assembly to move along the second slide rail.

The clamping assembly is provided with the fourth driving piece, the second connecting piece, and the second mounting plate, and the bottom surface of the second mounting plate is provided with the second slide rail extending along the first direction, so that the clamping assembly is in sliding fit with the second slide rail, and the clamping assembly can slide along the second slide rail. The structure is simple, the movement of the clamping assembly can be controlled, the operation is simplified, and the movement accuracy of the clamping assembly is improved.

It can be understood that in order to facilitate control, the clamping piece can be preliminarily positioned by driving the connecting bracket to move along the second direction by the second movement assembly, and then the clamping piece can be accurately positioned by controlling the clamping assembly to slide along the second slide rail, such that the clamping piece is moved to a preset position that is the position where the target piece can be clamped, and thus, the reliability of the tearing apparatus is improved.

In some embodiments, the clamping mechanism includes a plurality of clamping assemblies, and the clamping assemblies are spaced apart on the second mounting plate along the first direction.

The plurality of clamping assemblies are arranged, so that the release paper can be torn off the heat insulation pads of a plurality of groups of battery cells simultaneously. The device speed is improved, the efficiency of tearing the release paper is improved, and the production efficiency is improved.

In some embodiments, the first movement assembly includes a fifth driving piece and a third slide rail extending along the first direction, where the fifth driving piece drives the second movement assembly to move along the third slide rail.

The first movement assembly is provided with the fifth driving piece and the third slide rail, where the third slide rail extends along the first direction, the second movement assembly is slidably arranged on the third slide rail, and the fifth driving piece is configured to drive the second movement assembly to move along the third slide rail, so that the clamping piece is controlled to move along the first direction. The structure is simple, the movement of the clamping piece can be controlled, the operation is simplified, and the movement accuracy of the clamping piece is improved.

In some embodiments, the second movement assembly includes a third connecting piece and a sixth driving piece, where the third connecting piece includes a connecting portion and a sliding portion connected to the connecting portion, the connecting portion is arranged at a side of the third slide rail, the sliding portion is in sliding fit with the third slide rail, and the sixth driving piece is arranged at a side, facing away from the sliding portion, of the connecting portion and is drivably connected with the connecting bracket.

The second movement assembly is provided with the third connecting piece and the sixth driving piece, where the third connecting piece includes the connecting portion and the sliding portion connected to the connecting portion, the connecting portion is arranged at a side of the third slide rail and configured to connect the sliding portion and the connecting bracket of the clamping mechanism, the sliding portion is configured to be in sliding fit with the third slide rail, and the fifth driving piece drives the sliding portion to slide along the third slide rail to realize the movement of the third connecting piece along the first direction, so as to control the clamping piece to move along the first direction. The sixth driving piece drives the connecting bracket to move along the second direction, so as to control the movement of the clamping piece along the second direction. The structure is simple, the movement of the clamping piece can be controlled, the operation is simplified, and the movement accuracy of the clamping piece is improved.

In some embodiments, the tearing apparatus includes a tearing platform and a receiving box arranged along the first direction, where the tearing platform is configured for placing the material, and the receiving box is configured for reclaiming the target piece.

The tearing apparatus is provided with the tearing platform and the receiving box arranged along the first direction, and the clamping mechanism moves to a position above the receiving box along the first direction after tearing the target piece of the material, so as to realize the reclaiming of the target piece.

A second aspect of this application provides a battery manufacturing device, where the battery manufacturing device includes the tearing apparatus according to any one of the foregoing embodiments.

The tearing apparatus provided in the embodiments of this application is provided with the mounting bracket, the movement mechanism, and the clamping mechanism, where the movement mechanism is provided with the first movement assembly and the second movement assembly, the first movement assembly is controlled to drive the second movement assembly to move along the first direction, the second movement assembly drives the connecting bracket to move along the second direction, the clamping piece of the clamping assembly moves along the third direction, and the first direction, the second direction, and the third direction intersect with one another. A simple movement mechanism is arranged to control the movement track of the clamping piece and achieve tearing of the target piece of the material, so that the structure is simple, the occupied space is reduced, and the production costs are reduced. In addition, the first movement assembly and the second movement assembly cooperate, so that the clamping piece can move rapidly with large displacement in the first direction and the second direction; the clamping piece can be adjusted with small displacement in the third direction, so that accurate positioning can be realized on the premise of meeting the functions of positioning and tearing of the target piece; and the production efficiency can be further improved, and the occupied space can be further reduced.

A third aspect of this application provides a tearing method for a tearing apparatus, where the tearing apparatus includes a mounting bracket, a movement mechanism, a clamping mechanism, and a receiving box, the movement mechanism includes a first movement assembly and a second movement assembly, the first movement assembly is arranged on the mounting bracket, and the clamping mechanism includes a connecting bracket and a clamping assembly connected to the connecting bracket; and
the tearing method includes:
controlling the first movement assembly to drive the second movement assembly to move along a first direction, controlling the second movement assembly to drive the connecting bracket to move along a second direction, and controlling a clamping piece of the clamping assembly to move along a third direction, such that the clamping piece moves to a preset position, where the first direction, the second direction, and the third direction intersect with one another;
controlling the clamping piece to clamp a target piece of a material;
controlling the clamping piece to move along a fourth direction such that the clamping piece tears off the target piece, where a plane defined by the second direction and the third direction is parallel to the fourth direction, and the fourth direction is in oblique intersection with both the second direction and the third direction; and
controlling the clamping piece to move to a position above the receiving box to reclaim the target piece.

In the tearing method for the tearing apparatus in the embodiments of this application, the first movement assembly is controlled to drive the second movement assembly to move along the first direction, the second movement assembly is controlled to drive the connecting bracket to move along the second direction, and the clamping piece of the clamping assembly is controlled to move along the third direction, such that the clamping piece moves to the preset position. That is, the first movement assembly and the second movement assembly are arranged, and then the clamping piece moves along the third direction, so that movement of the clamping piece along the first direction, the second direction, and the third direction is realized, and the clamping piece moves to the preset position. Then the clamping piece is controlled to clamp the target piece of the material, that is, the clamping piece is controlled to be in the clamp state for clamping the target piece; then the clamping piece is controlled to tear off the target piece, that is, the movement of the clamping piece can be controlled, such that the clamping piece tears off the target piece during movement; and the clamping piece is controlled to move to a position above the receiving box to reclaim the target piece.

In some embodiments, the controlling the clamping piece to tear off the target piece includes:
controlling the clamping piece to move along a fourth direction such that the clamping piece tears off the target piece, where the plane defined by the second direction and the third direction is parallel to the fourth direction, and the fourth direction is in oblique intersection with both the second direction and the third direction.

The clamping piece is arranged to move along the fourth direction relative to the connecting bracket, so that after the clamping piece fixes a tearing portion of release paper, the release paper can be torn off by controlling the clamping piece to move along the fourth direction in the process of tearing off the release paper. That is, the clamping piece is controlled to move along the fourth direction, in other words, the clamping piece is controlled to move obliquely upwards, the friction and/or adhesive force between the release paper and a heat insulation pad is thus reduced in the process of tearing off, which is conducive to tearing off the release paper and can avoid to some extent the occurrence of residue of the release paper, break of the tearing portion of the release paper, and the like caused by the incomplete tear-off of the release paper, thus improving the applicability of the tearing apparatus, that is, the tearing apparatus can also be configured to tear off thin and small release paper.

In some embodiments, the controlling the clamping piece to move to a position above the receiving box to reclaim the target piece includes:
controlling the first movement assembly to drive the second movement assembly to move along the first direction, and controlling the second movement assembly to drive the connecting bracket to move along the second direction, such that the clamping piece moves to a position above the receiving box; and
controlling the clamping piece to switch to a release state for releasing the target piece to reclaim the target piece.

The tearing apparatus is provided with a tearing platform and a receiving box arranged along the first direction. After the clamping mechanism tears off the target piece of the material, the first movement assembly is controlled to drive the second movement assembly to move along the first direction, and the second movement assembly is controlled to drive the connecting bracket to move along the second direction, such that the clamping piece moves to a position above the receiving box, and the clamping piece is controlled to switch to the release state to release the target piece, so as to reclaim the target piece.

### BRIEF DESCRIPTION OF DRAWINGS

Persons of ordinary skill in the art can clearly understand various other advantages and benefits by reading the detailed description of the preferred embodiments below. The drawings are merely intended to illustrate the exemplary embodiments, but not to limit this application. Moreover, throughout the accompanying drawings, the same reference signs represent the same parts. In the accompanying drawings:
FIG. 1 is a schematic structural diagram of a tearing apparatus from a first perspective provided in some embodiments of this application;
FIG. 2 is a schematic structural diagram of the tearing apparatus shown in FIG. 1 from a second perspective;
FIG. 3 is a schematic structural diagram of a clamping mechanism provided in some embodiments of this application;
FIG. 4 is a schematic structural diagram of a clamping assembly from a third perspective provided in some embodiments of this application;
FIG. 5 is a schematic structural diagram of the clamping assembly shown in FIG. 4 from a fourth perspective; and
FIG. 6 is a schematic diagram of a tearing method for the tearing apparatus provided in some embodiments of this application.

### DETAILED DESCRIPTION OF EMBODIMENTS

Embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by persons skilled in the technical field of this application. The terms used herein are merely intended to describe specific embodiments but not to limit this application. The terms "include" and "contain" and any variations thereof used in this application are intended as non-exclusive inclusion.

In the description of the embodiments of this application, the technical terms "first", "second", "third", and the like are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to "embodiment" herein means that a specific feature, structure, or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. Persons skilled in the art explicitly and implicitly understand that the embodiments described herein may be combined with other embodiments.

In the description of embodiments of this application, the term "and/or" merely indicates a relationship between related items, and represents three possible relationships. For example, A and/or B may indicate the following three cases: presence of only A; presence of both A and B; and presence of only B. In addition, the character "/" herein generally indicates an "or" relationship between contextually associated objects.

In the description of the embodiments of this application, a direction or a positional relationship indicated by the technical terms such as "length", "width", "thickness", "up", "down", "before", "after", "left", "right", "vertical", "horizontal", "top", "bottom", "in", "out", "circumferential" "height direction", "first direction", "second direction", "third direction", "fourth direction", "X axis", "Y axis", "Z axis" and "E axis" is only a direction or positional relationship based on the illustration in the drawings, and is merely intended for ease or brevity of description of embodiments of this application, but not intended to indicate or imply that the indicated apparatus or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "join", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. Persons of ordinary skill in the art can understood specific meanings of the above terms in the embodiments of this application based on specific situations.

In the description of the embodiments of this application, unless otherwise expressly specified and limited, the technical term "contact" need to be understood in a broad sense, which can be direct contact, contact through an intermediate medium layer, contact with substantially no interaction force therebetween, or contact with interaction force therebetween.

The vigorous promotion of new energy vehicles by the authorities ushers in a great opportunity for the development of new energy vehicles. The safety and stability of vehicles have always been people's top concern. Therefore, improving the safety of new energy vehicles will be one of the important factors that determine whether new energy vehicles can be popularized quickly. As a main component of the battery pack of new energy vehicles, improving the safety of battery modules is an important approach to improving the safety of new energy vehicles.

A battery module typically includes a plurality of battery cells, and adjacent battery cells can be adhered to each other by a double-sided adhesive tape. In addition, a module frame surrounds a battery, and a fixing apparatus for the module is provided. According to series/parallel connection of the module, a corresponding copper or aluminum would be connected between battery cell poles.

However, when the double-sided adhesive tape is supplied, the double-sided adhesive tape is usually covered with release paper, and the release paper needs to be torn off before the double-sided adhesive tape is adhered to the battery cell. Specifically, in the conventional production process, the speed of sticking sheet foam double-sided adhesive tape manually and peeling release paper manually is slow, which is not only low in the production efficiency, but also increases the labor costs. In addition, automatic tearing of release paper has always been a difficulty in achieving automatic sticking of the double-sided adhesive tape.

To realize paper tearing, a conventional tearing apparatus has a complex structure and occupies a large space, and thus can be hardly applied to production lines in a narrow space, and there are also problems such as high downtime rate of automation, high device costs, and difficult maintenance.

To solve the problems of complex structure, large occupied space, and high production costs, a tearing apparatus is designed in this application. The tearing apparatus includes a mounting bracket, a movement mechanism, and a clamping mechanism. The movement mechanism includes a first movement assembly and a second movement assembly. The first movement assembly is arranged on the mounting bracket. The first movement assembly is configured to drive the second movement assembly to move along a first direction. The clamping mechanism includes a connecting bracket and a clamping assembly. The second movement assembly is configured to drive the connecting bracket to move along a second direction. The clamping assembly is connected to the connecting bracket, and a clamping piece of the clamping assembly can move along a third direction. The clamping piece is configured to clamp a target piece of a material for tearing. The first direction, the second direction, and the third direction intersect with one another.

The tearing apparatus is provided with the mounting bracket, the movement mechanism, and the clamping mechanism, where the movement mechanism is provided with the first movement assembly and the second movement assembly, the first movement assembly is controlled to drive the second movement assembly to move along the first direction, the second movement assembly drives the connecting bracket to move along the second direction, the clamping piece of the clamping assembly moves along the third direction, and the first direction, the second direction, and the third direction intersect with one another. A simple movement mechanism is arranged to control the movement track of the clamping piece, and achieve tearing of the target piece of the material, so that the structure is simple, the occupied space is reduced, and the production costs are reduced. In addition, the first movement assembly and the second movement assembly cooperate, so that the clamping piece can move rapidly with large displacement in the first direction and the second direction; the clamping piece can be adjusted with small displacement in the third direction, so that accurate positioning can be realized on the premise of meeting the functions of positioning and tearing of the target piece; and the production efficiency can be further improved, and the occupied space can be further reduced.

The specific type of material is not limited herein, and in the embodiments of this application, the material being a heat insulation pad is taken as an example for description.

The tearing apparatus provided in this application can be configured to tear off not only release paper, but also other film structures, which is not specifically limited.

The tearing apparatus can be configured to tear off not only the release paper on the first side of the material, but also the release paper on the second side of the material, and can also be configured to tear off the release paper on both the first and second sides of the material, which is not specifically limited.

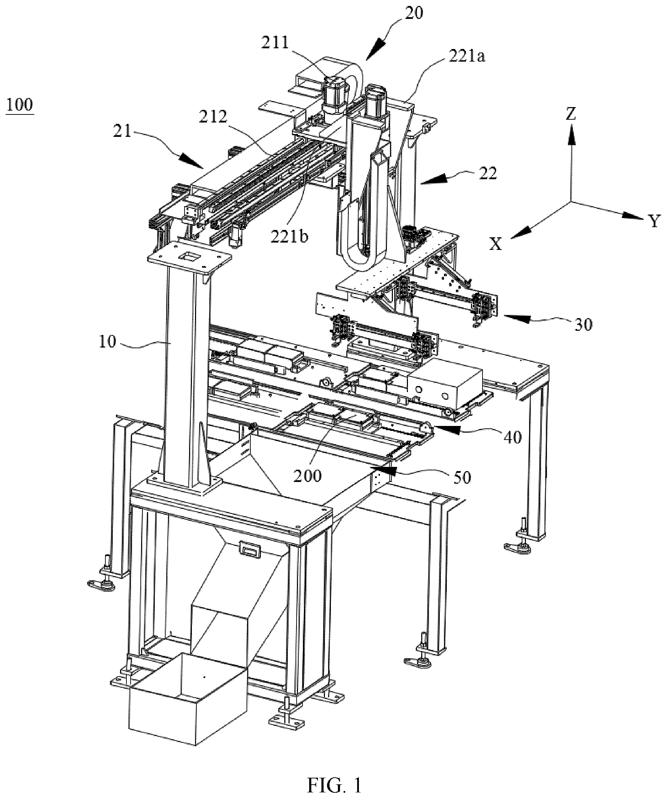

According to some embodiments of this application, referring to FIGs. 1 to 5, a tearing apparatus 100 is designed in this application. The tearing apparatus 100 includes a mounting bracket 10, a movement mechanism 20 and a clamping mechanism 30. The movement mechanism 20 includes a first movement assembly 21 and a second movement assembly 22. The first movement assembly 21 is arranged on the mounting bracket 10. The first movement assembly 21 is configured to drive the second movement assembly 22 to move along a first direction. The clamping mechanism 30 includes a connecting bracket 31 and a clamping assembly 32. The second movement assembly 22 is configured to drive the connecting bracket 31 to move along a second direction. The clamping assembly 32 is connected to the connecting bracket 31, and a clamping piece 321 of the clamping assembly 32 can move along a third direction. The clamping piece 321 is configured to clamp a target piece of a material 200 for tearing. The first direction, the second direction, and the third direction intersect with one another.

It should be noted that the specific structure of the mounting bracket 10 is not limited here. For example, the mounting bracket 10 includes a plurality of vertical beams and a plurality of cross beams for supporting and mounting other components of the tearing apparatus 100.

The target piece herein may be release paper or other film structures. In the embodiments of this application, the target piece being release paper is taken as an example for description.

The clamping piece 321 may clamp a tearing portion of the release paper for tearing.

To clamp release paper conveniently, the release paper needs to have a special shape, that is, the release paper has a part that covers one side surface of the heat insulation pad, and the release paper needs to be protruded from the part so as to be clamped. For example, when the insulation pad is rectangular, the release paper has not only an adhesion area matching the shape of the rectangular area, but also a special-shaped area protruding from one side of the adhesion area, and the length of the special-shaped area needs to be less than the side length of the rectangle. Thus, this helps the clamping mechanism 30 to clamp the tearing portion of release paper for tearing.

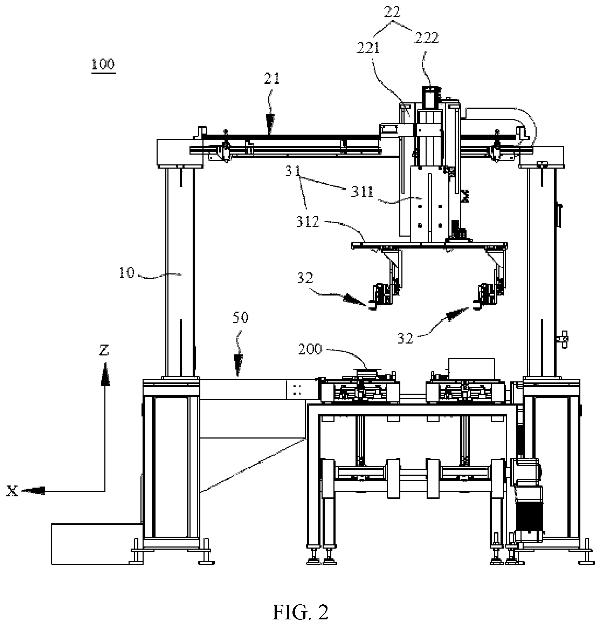

Referring to FIGs. 1 and 2, the first movement assembly 21 is arranged on the mounting bracket 10, the first movement assembly 21 is configured to drive the second movement assembly 22 to move along the first direction, so as to control the clamping piece 321 to move along the first direction.

The clamping mechanism 30 includes a connecting bracket 31 and a clamping assembly 32, where the connecting bracket 31 is configured to connect the clamping assembly 32 and the second movement assembly 22, and the clamping piece 321 of the clamping assembly 32 is configured to clamp the target piece of the material 200.

The second movement assembly 22 is configured to drive the connecting bracket 31 to move along the second direction, so as to control the clamping piece 321 to move along the second direction.

The clamping piece 321 of the clamping assembly 32 moves along the third direction, so as to control the clamping piece 321 to move along the third direction.

The first direction, the second direction, and the third direction intersect with one another, that is, any two of the first direction, the second direction, and the third direction are not parallel to each other, which is conducive to realizing the movement of the clamping piece 321 along the X axis, the Y axis, and the Z axis of the three-dimensional coordinate system.

The movement mechanism 20 is provided with the first movement assembly 21 and the second movement assembly 22, and the clamping piece 321 is configured to be able to move along the third direction, so that the movement of the clamping piece 321 along the X axis, the Y axis, and the Z axis can be achieved, which has the advantages of simple structure, low downtime rate of automation, low device costs, and easy maintenance.

The tearing apparatus 100 provided in the embodiments of this application is provided with the mounting bracket 10, the movement mechanism 20, and the clamping mechanism 30, where the movement mechanism 20 is provided with the first movement assembly 21 and the second movement assembly 22, the first movement assembly 21 is controlled to drive the second movement assembly 22 to move along the first direction, the second movement assembly 22 drives the connecting bracket 31 to move along the second direction, and the clamping piece 321 of the clamping assembly 32 moves along the third direction. The first direction, the second direction, and the third direction intersect with one another. The simple movement mechanism 20 is arranged to control the movement track of the clamping piece 321 and achieve tearing of the target piece of the material 200, so that the structure is simple, the occupied space is reduced, and the production costs are reduced. In addition, the first movement assembly 21 and the second movement assembly 22 cooperate, so that the clamping piece 321 can move rapidly with large displacement in the first direction and the second direction; the clamping piece 321 can be adjusted with small displacement in the third direction, so that accurate positioning can be realized on the premise of meeting the functions of positioning and tearing of the target piece; and the production efficiency can be further improved, and the occupied space can be further reduced.

It can be understood that since the tearing apparatus 100 of the embodiments of this application occupies a smaller space, the tearing apparatus is not only suitable for tearing off release paper in a CTP (Cell To Pack) platform, but also suitable for tearing off release paper of other products. That is, the tearing apparatus 100 of the embodiments of this application has the characteristics of high applicability.

The tearing apparatus 100 provided in the embodiments of this application can realize low-cost and high-precision paper tearing in a relatively small space only by means of mechanically positioning of a simple three-axis robot, and is configured to tear off the release paper on the heat insulation pads in the large and side surfaces of CTP battery cells, so as to ensure that no release paper remains, ensure the safety performance of heat insulation, buffering, and the like of the traction battery, and solve the problem of large occupied space through the cooperation of movement tracks of three groups of two-axis mechanisms.

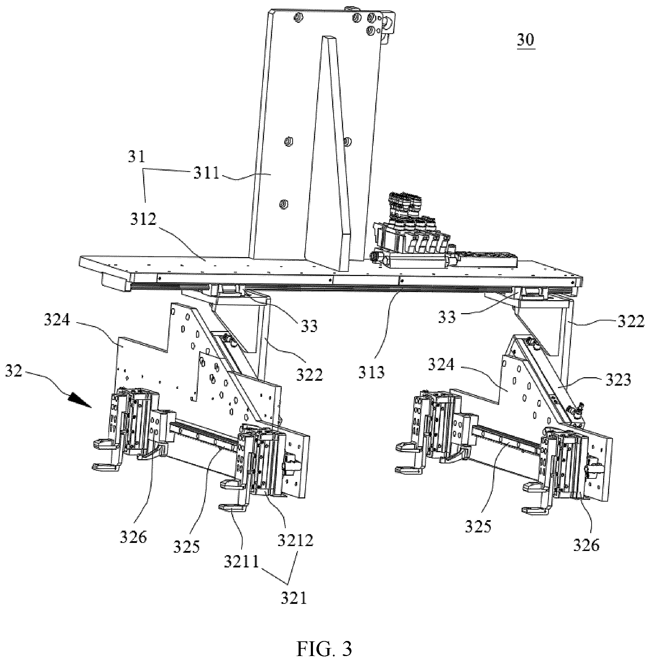

In some implementations, referring to FIGs. 3 to 5, the clamping piece 321 can move along a fourth direction relative to the connecting bracket 31. The plane defined by the second direction and the third direction is parallel to the fourth direction, and the fourth direction is in oblique intersection with both the second direction and the third direction, where the first direction, the second direction, and the third direction are perpendicular to one another.

Referring to FIG. 1, the first direction, the second direction, and the third direction are perpendicular to one another, where the first direction is defined as the X axis, the second direction is defined as the Y axis, and the third direction is defined as the Z axis, so that the XYZ three-dimensional coordinate system is constructed.

In the embodiments of this application, the Z axis being a height direction is taken as an example for description.

The fourth direction is in oblique intersection with the second direction and the third direction, that is, both an included angle between the fourth direction and the second direction and an included angle between the fourth direction and the third direction are acute, and the included angles after the fourth direction intersects with the second direction and the third direction are not equal to 90 degrees respectively. Oblique intersection is relative to orthogonal intersection, where an angle of orthogonal intersection is 90 degrees.

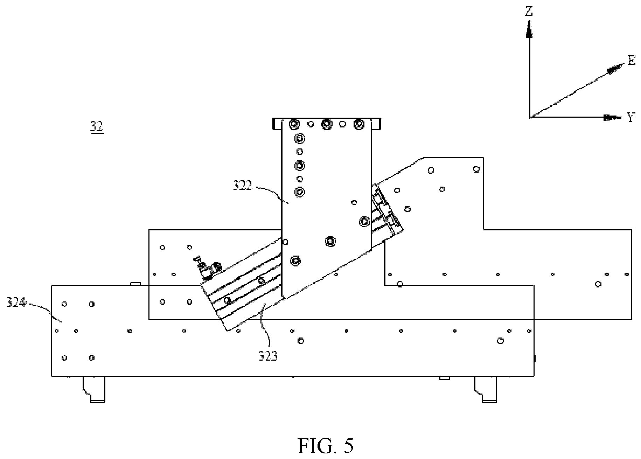

For example, the fourth direction is a direction E shown in FIG. 5 for example.

The clamping piece 321 is arranged to move along the fourth direction relative to the connecting bracket 31, so that after the clamping piece 321 fixes a tearing portion of release paper, the release paper can be torn off by controlling the clamping piece 321 to move along the fourth direction in the process of tearing off the release paper. That is, the clamping piece 321 is controlled to move along the fourth direction, in other words, the clamping piece 321 is controlled to move obliquely upwards, the friction and/or adhesive force between the release paper and the heat insulation pad is thus reduced in the process of tearing, which is conducive to tearing off the release paper and can avoid to some extent the occurrence of residue of the release paper, break of the tearing portion of the release paper, and the like caused by the incomplete tear-off of the release paper, thus improving the applicability of the tearing apparatus 100, that is, the tearing apparatus 100 can also be configured to tear off thin and small release paper.

In some other implementations, in the process of tearing off the release paper, the clamping piece 321 can be controlled to move along the first direction while the clamping piece 321 also moves along the fourth direction, so as to tear off the release paper.

In a specific embodiment, during the upward movement of the clamping piece 321, the clamping piece moves along a diagonal direction of the release paper at the same time, so that the release paper is torn off the adhesive surface, and then leaves in a path that avoids the material 200.

There are various ways to control the clamping piece 321 to move along the fourth direction relative to the connecting bracket 31.

For example, in some implementations, referring to FIGs. 1 to 5, the clamping assembly 32 includes a first connecting piece 322 connected to the connecting bracket 31 and a first driving piece 323 connected to the first connecting piece 322. The first driving piece 323 extends along the fourth direction. The first driving piece 323 is configured to drive the clamping piece 321 to move along the fourth direction.

It should be noted that the specific type of the first driving piece 323 is not limited here. The first driving piece 323 may be an air cylinder, an electric cylinder, or a hydraulic cylinder. In the embodiments of this application, the first driving piece 323 being an air cylinder is taken as an example for description. A power output end of the air cylinder is connected to the first connecting piece 322. In this way, the clamping piece 321 can be driven to move through the telescopic movement of the air cylinder, so that the clamping piece 321 is driven to move along the fourth direction.

The first driving piece 323 is arranged, and the first driving piece 323 extends along the fourth direction, so that the first driving piece 323 makes telescopic movement along the extending direction thereof so as to drive the clamping piece 321 to move, the movement of the clamping piece 321 can be controlled, the operation is simplified, and the movement accuracy of the clamping piece 321 is improved.

There are various ways to control the clamping piece 321 to move along the third direction relative to the connecting bracket 31.

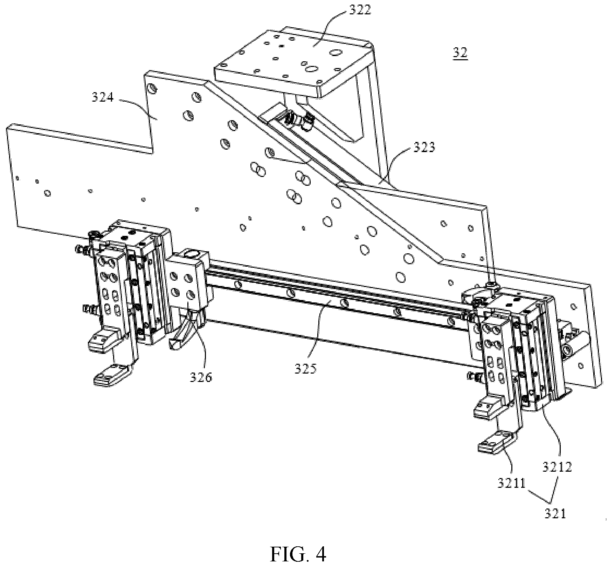

In some implementations, referring to FIGs. 4 and 5, the clamping assembly 32 further includes a first mounting plate 324 connected to the first driving piece 323, and a first slide rail 325 and a second driving piece 326 arranged on the first mounting plate 324. The first driving piece 323 is configured to drive the first mounting plate 324 to move along the fourth direction. The first slide rail 325 extends along the third direction. The second driving piece 326 is configured to drive the clamping piece 321 to move along the first slide rail 325.

The clamping assembly 32 further includes the first mounting plate 324 connected to the first driving piece 323. The first driving piece 323 is configured to drive the first mounting plate 324 to move along the fourth direction. That is, the first mounting plate 324 is arranged and the clamping piece 321 and other components are assembled on the first mounting plate 324, and the first driving piece 323 drives the first mounting plate 324 to move along the fourth direction, so that the first driving piece 323 drives the clamping piece 321 to move along the fourth direction.

It should be noted that the specific type of the second driving piece 326 is not limited here. The second driving piece 326 may be an air cylinder, an electric cylinder, a hydraulic cylinder, or a lead screw structure.

The clamping assembly 32 is provided with the first slide rail 325 and the second driving piece 326, where the first slide rail 325 and the second driving piece 326 are arranged on the first mounting plate 324. The first slide rail 325 extends along the third direction, the clamping piece 321 is slidably arranged on the first slide rail 325, and the second driving piece 326 is configured to drive the clamping piece 321 to move along the first slide rail 325. This structure is simple, the movement of the clamping piece 321 can be controlled, the operation is simplified, and the movement accuracy of the clamping piece 321 is improved.

In some implementations, the clamping assembly 32 includes a plurality of clamping pieces 321. For example, the number of the clamping pieces is 2, 3, 4, 5, 6, 7, 8, or 9.

The plurality of clamping pieces 321 are arranged to tear the release paper from a plurality of heat insulation pads simultaneously, the device speed is improved, thereby improving the efficiency of tearing off the release paper and further improving the production efficiency. In addition, the plurality of clamping pieces 321 are arranged, so as to adapt to both single-row battery cells and double-row battery cells.

In a specific embodiment, referring to FIGs. 1 to 4, the number of the clamping pieces 321 is 2.

A plurality of clamping pieces 321 are spaced apart on the first slide rail 325.

In some implementations, referring to FIGs. 3 and 4, the clamping piece 321 includes a clamping jaw 3211 and a third driving piece 3212, where the third driving piece 3212 drives the clamping jaw 3211 to switch between a clamp state for clamping the target piece and a release state for releasing the target piece.

It should be noted that the specific type of the third driving piece 3212 is not limited here. The third driving piece 3212 may be an air cylinder, an electric cylinder, or a hydraulic cylinder. In the embodiments of this application, the third driving piece 3212 being an air cylinder is taken as an example for description. The power output end of the air cylinder is connected to the clamping jaw 3211. In this way, the clamping jaw 3211 can be driven to move by the telescopic movement of the air cylinder, such that the clamping jaw 3211 can be switched between the clamp state for clamping the target piece and the release state for releasing the target piece. The structure is simple, and the reliability of the clamping piece 321 is ensured.

It should be noted that the clamping jaw 3211 includes two sub-jaws here. When the clamping jaw 3211 clamps the target piece, the two sub-jaws may move towards each other, that is, both sub-jaws may move to clamp the target piece, or one of the two sub-jaws may move while the other does not move to clamp the target piece.

In some implementations, referring to FIGs. 3 to 5, the clamping mechanism 30 includes a fourth driving piece 33. The connecting bracket 31 includes a second connecting piece 311 connected to the second movement assembly 22 and a second mounting plate 312 connected to the second connecting piece 311. The bottom surface of the second mounting plate 312 is provided with a second slide rail 313 extending along the first direction. The fourth driving piece 33 is configured to drive the clamping assembly 32 to move along the second slide rail 313.

It should be noted that the specific type of the fourth driving piece 33 is not limited here. The fourth driving piece 33 may be an air cylinder, an electric cylinder, a hydraulic cylinder, or a lead screw structure.

In other embodiments, the fourth driving piece 33 may be pushed manually, so that the clamping assembly 32 can also move along the second slide rail 313.

The clamping assembly 32 is provided with the fourth driving piece 33, the second connecting piece 311, and the second mounting plate 312, and the second slide rail 313 extending along the first direction is arranged on the bottom surface of the second mounting plate 312, so that the clamping assembly 32 is in sliding fit with the second slide rail 313, and the clamping assembly 32 can slide along the second slide rail 313. The structure is simple, the movement of the clamping assembly 32 can be controlled, the operation is simplified, and the movement accuracy of the clamping assembly 32 is improved.

It can be understood that in order to facilitate control, the clamping piece 321 can be preliminarily positioned by driving the connecting bracket 31 to move along the second direction by the second movement assembly 22, and then the clamping piece 321 can be accurately positioned by controlling the clamping assembly 32 to slide along the second slide rail 313, such that the clamping piece 321 is moved to a preset position that is the position where the target piece can be clamped, and thus, the reliability of the tearing apparatus 100 is improved.

In some implementations, referring to FIGs. 1 to 3, the clamping mechanism 30 includes a plurality of clamping assemblies 32. The clamping assemblies 32 are spaced apart on the second mounting plate 312 along the first direction.

For example, there are 2, 3, 4, 5, 6, 7, 8, or 9 clamping assemblies 32.

The plurality of clamping assemblies 32 are arranged, so that the release paper can be torn off the heat insulation pads of a plurality of groups of battery cells simultaneously. The device speed is improved, the efficiency of tearing the release paper is improved, and the production efficiency is improved.

In a specific embodiment, the number of the clamping assemblies 32 is 2.

A plurality of clamping assemblies 32 are spaced apart on the second mounting plate 312. The spacing between the plurality of clamping assemblies 32 can be adjusted according to requirements, that is, different types of production lines.

In some implementations, referring to FIGs. 1 and 2, the first movement assembly 21 includes a fifth driving piece 211 and a third slide rail 212 extending along the first direction. The fifth driving piece 211 drives the second movement assembly 22 to move along the third slide rail 212.

It should be noted that the specific type of the fifth driving piece 211 is not limited here. The fifth driving piece 211 may be an air cylinder, an electric cylinder, a hydraulic cylinder, or a lead screw structure.

The first movement assembly 21 is provided with the fifth driving piece 211 and the third slide rail 212, the third slide rail 212 extends along the first direction, the second movement assembly 22 is slidably arranged on the third slide rail 212, and the fifth driving piece 211 is configured to drive the second movement assembly 22 to move along the third slide rail 212, so that the clamping piece 321 is controlled to move along the first direction. The structure is simple, the movement of the clamping piece 321 can be controlled, the operation is simplified, and the movement accuracy of the clamping piece 321 is improved.

In some implementations, referring to FIGs. 1 and 2, the second movement assembly 22 includes a third connecting piece 221 and a sixth driving piece 222. The third connecting piece 221 includes a connecting portion 221a and a sliding portion 221b connected to the connecting portion 221a. The connecting portion 221a is arranged at a side of the third slide rail 212. The sliding portion 221b is in sliding fit with the third slide rail 212. The sixth driving piece 222 is arranged at a side, facing away from the sliding portion 221b, of the connecting portion 221a, and is drivably connected with the connecting bracket 31.

It should be noted that the specific type of the sixth driving piece 222 is not limited here. The sixth driving piece 222 may be an air cylinder, an electric cylinder, a hydraulic cylinder, or a lead screw structure.

The third connecting piece 221 is configured to connect the first movement assembly 21 and the clamping mechanism 30.

It should be noted that the specific structure of the third connecting piece 221 is not limited here, and the third connecting piece 221 includes a connecting portion 221a and a sliding portion 221b connected to the connecting portion 221a. The connecting portion 221a is arranged at a side of the third slide rail 212 and configured to connect the sliding portion 221b and the clamping mechanism 30, one end of the sliding portion 221b is connected to the connecting portion 221a, the other end of the sliding portion extends to the end far away from the connecting portion 221a and is in sliding fit with the third slide rail 212, the fifth driving piece 211 drives the sliding portion 221b to slide along the third slide rail 212, so as to realize the movement of the third connecting piece 221 along the first direction, and control the clamping piece 321 to move along the first direction.

The sliding portion 221b can be connected to the top of the connecting portion 221a, and the connecting bracket 31 is connected to the middle or bottom of the connecting portion 221a, so that the space in the height direction can be fully utilized and the layout can be reasonable, and the structure of the tearing apparatus 100 is more compact.

The sixth driving piece 222 is arranged at a side, facing away from the sliding portion 221b, of the connecting portion 221a, and is drivably connected with the connecting bracket 31. The sixth driving piece 222 is drivably connected with the connecting bracket 31, so as to control the clamping piece 321 to move along the second direction.

The second movement assembly 22 is provided with the third connecting piece 221 and the sixth driving piece 222, where the third connecting piece 221 includes the connecting portion 221a and the sliding portion 221b connected to the connecting portion 221a, the connecting portion 221a is arranged at a side of the third slide rail 212 and configured to connect the sliding portion 221b and the connecting bracket 31 of the clamping mechanism 30, the sliding portion 221b is configured to be in sliding fit with the third slide rail 212, and the fifth driving piece 211 drives the sliding portion 221b to slide along the third slide rail 212 to realize the movement of the third connecting piece 221 along the first direction, so as to control the clamping piece 321 to move along the first direction. The sixth driving piece 222 drives the connecting bracket 31 to move along the second direction, so as to control the movement of the clamping piece 321 along the second direction. The structure is simple, the movement of the clamping piece 321 can be controlled, the operation is simplified, and the movement accuracy of the clamping piece 321 is improved.

In some implementations, referring to FIGs. 1 and 2, the tearing apparatus 100 includes a tearing platform 40 and a receiving box 50 arranged along the first direction. The tearing platform 40 is configured for placing the material 200. The receiving box 50 is configured for reclaiming the target piece.

The receiving box 50 is configured for reclaiming the target piece, which is conducive to realizing reclaiming of the target piece.

The tearing platform 40 is configured for placing the material 200, so that the clamping mechanism 30 tears off the target piece of the material 200.

The tearing apparatus 100 is provided with the tearing platform 40 and the receiving box 50 arranged along the first direction, and the clamping mechanism 30 moves to a position above the receiving box 50 along the first direction after tearing the target piece of the material 200, so as to realize reclaiming of the target piece.

According to some embodiments of this application, this application further provides a battery manufacturing device which includes the tearing apparatus 100 according to any one of the foregoing embodiments.

According to some embodiments of this application, this application further provides a tearing method for a tearing apparatus 100. Referring to FIGs. 1 to 5, the tearing apparatus 100 includes a mounting bracket 10, a movement mechanism 20, a clamping mechanism 30 and a receiving box 50. The movement mechanism 20 includes a first movement assembly 21 and a second movement assembly 22. The first movement assembly 21 is arranged on the mounting bracket 10. The clamping mechanism 30 includes a connecting bracket 31 and a clamping assembly 32 connected to the connecting bracket 31.

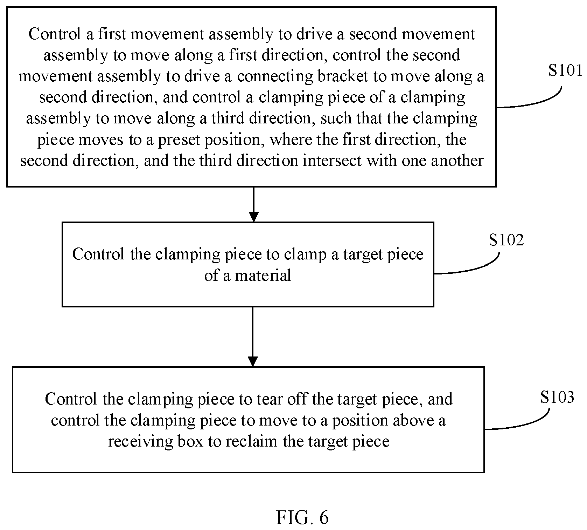

Referring to FIG. 6, the tearing method includes the following steps.

S101: Control the first movement assembly to drive the second movement assembly to move along the first direction, control the second movement assembly to drive the connecting bracket to move along the second direction, and control a clamping piece of the clamping assembly to move along the third direction, such that the clamping piece moves to a preset position, where the first direction, the second direction, and the third direction intersect with one another.

S102: Control the clamping piece to clamp a target piece of a material.

S103: Control the clamping piece to tear off the target piece, and control the clamping piece to move to a position above the receiving box to reclaim the target piece.

Referring to FIGs. 1 to 5, the first movement assembly 21 is arranged on the mounting bracket 10, and the first movement assembly 21 is configured to drive the second movement assembly 22 to move along the first direction, so as to control the clamping piece 321 to move along the first direction.

The clamping mechanism 30 includes a connecting bracket 31 and a clamping assembly 32, where the connecting bracket 31 is configured to connect the clamping assembly 32 and the second movement assembly 22, and the clamping piece 321 of the clamping assembly 32 is configured to clamp the target piece of the material 200.

The second movement assembly 22 is configured to drive the connecting bracket 31 to move along the second direction, so as to control the clamping piece 321 to move along the second direction.

The clamping piece 321 of the clamping assembly 32 moves along the third direction, so as to control the clamping piece 321 to move along the third direction.

The first direction, the second direction, and the third direction intersect with one another, that is, any two of the first direction, the second direction, and the third direction are not parallel to each other, which is conducive to realizing the movement of the clamping piece 321 along the X axis, the Y axis, and the Z axis of the three-dimensional coordinate system.

For example, the first direction, the second direction, and the third direction are perpendicular to one another, where the first direction is defined as the X axis, the second direction is defined as the Z axis, and the third direction is defined as the Y axis, so that the XYZ three-dimensional coordinate system is constructed.

In the embodiments of this application, the Z axis being a height direction is taken as an example for description.

The movement mechanism 20 is provided with the first movement assembly 21 and the second movement assembly 22, and the clamping piece 321 is configured to be able to move along the third direction, so that the movement of the clamping piece 321 along the X axis, the Y axis, and the Z axis can be achieved, which has the advantages of simple structure, low downtime rate of automation, low device costs, and easy maintenance.

The first movement assembly 21 and the second movement assembly 22 each are a two-axis mechanism, the clamping mechanism 30 is also a two-axis mechanism, the movement in each of the three directions along the X axis, the Y axis, and the Z axis is in place through servo reference of the two-axis mechanisms, and accurate mechanical positioning is realized.

The tearing apparatus 100 provided in the embodiments of this application is provided with the mounting bracket 10, the movement mechanism 20, and the clamping mechanism 30, where the movement mechanism 20 is provided with the first movement assembly 21 and the second movement assembly 22. The first movement assembly 21 is controlled to drive the second movement assembly 22 to move along the first direction, the second movement assembly 22 drives the connecting bracket 31 to move along the second direction, and the clamping piece 321 of the clamping assembly 32 moves along the third direction. The first direction, the second direction, and the third direction intersect with one another. The simple movement mechanism 20 is arranged to control the movement track of the clamping piece 321 and achieve tearing of the target piece of the material 200, so that the structure is simple, the occupied space is reduced, and the production costs are reduced. In addition, the first movement assembly 21 and the second movement assembly 22 cooperate, so that the clamping piece 321 can move rapidly with large displacement in the first direction and the second direction; the clamping piece 321 can be adjusted with small displacement in the third direction, so that accurate positioning can be realized on the premise of meeting the functions of positioning and tearing of the target piece; and the production efficiency can be further improved, and the occupied space can be further reduced.

In the tearing method for the tearing apparatus 100 in the embodiments of this application, the first movement assembly 21 is controlled to drive the second movement assembly 22 to move along the first direction, the second movement assembly 22 is controlled to drive the connecting bracket 31 to move along the second direction, and the clamping piece 321 of the clamping assembly 32 is controlled to move along the third direction, such that the clamping piece 321 moves to the preset position. That is, the first movement assembly 21 and the second movement assembly 22 are arranged, and then the clamping piece 321 moves along the third direction, so that movement of the clamping piece 321 in the first direction, the second direction, and the third direction is realized, and the clamping piece 321 moves to the preset position. Then, the clamping piece 321 is controlled to clamp the target piece of the material 200, that is, the clamping piece 321 is controlled to be in the clamp state for clamping the target piece; then the clamping piece 321 is controlled to tear off the target piece, that is, the movement of the clamping piece 321 can be controlled, such that the clamping piece 321 tears off the target piece during movement; and the clamping piece 321 is controlled to move to a position above the receiving box 50 to reclaim the target piece.

In some implementations, that the clamping piece 321 is controlled to tear off the target piece includes:
the clamping piece 321 is controlled to move along the fourth direction such that the clamping piece 321 tears off the target piece, where the plane defined by the second direction and the third direction is parallel to the fourth direction, and the fourth direction is in oblique intersection with both the second direction and the third direction.

The fourth direction is in oblique intersection with the second direction and the third direction, that is, both the included angle between the fourth direction and the second direction and the included angle between the fourth direction and the third direction are acute, and the included angles after the fourth direction intersects with the second direction and the third direction are not equal to 90 degrees respectively. Oblique intersection is relative to orthogonal intersection, where an angle of orthogonal intersection is 90 degrees.

For example, the fourth direction is the direction E shown in FIG. 5 for example.

The clamping piece 321 is arranged to move along the fourth direction relative to the connecting bracket 31, so that after the clamping piece 321 fixes a tearing portion of release paper, the release paper can be torn off by controlling the clamping piece 321 to move along the fourth direction in the process of tearing off the release paper. That is, the clamping piece 321 is controlled to move along the fourth direction, that is the clamping piece 321 is controlled to move obliquely upwards, the friction and/or adhesive force between the release paper and the heat insulation pad is thus reduced in the process of tearing, which is conducive to tearing off the release paper and can avoid to some extent the occurrence of residue of the release paper, break of the tearing portion of the release paper, and the like caused by the incomplete tear-off of the release paper, thus improving the applicability of the tearing apparatus 100, that is, the tearing apparatus 100 can also be configured to tear off thin and small release paper.

There are various ways to control the clamping piece 321 to move along the fourth direction relative to the connecting bracket 31.

For example, in some implementations, referring to FIGs. 1 to 5, the clamping assembly 32 includes a first connecting piece 322 connected to the connecting bracket 31 and a first driving piece 323 connected to the first connecting piece 322. The first driving piece 323 extends along the fourth direction. The first driving piece 323 is configured to drive the clamping piece 321 to move along the fourth direction.

It should be noted that the specific type of the first driving piece 323 is not limited here. The first driving piece 323 may be an air cylinder, an electric cylinder, or a hydraulic cylinder. In the embodiments of this application, the first driving piece 323 being an air cylinder is taken as an example for description. The power output end of the air cylinder is connected to the first connecting piece 322. In this way, the clamping piece 321 can be driven to move through the telescopic movement of the air cylinder, so that the clamping piece 321 is driven to move along the fourth direction.

The first driving piece 323 is arranged, and the first driving piece 323 extends along the fourth direction, so that the first driving piece 323 makes telescopic movement in the extending direction thereof so as to drive the clamping piece 321 to move, the movement of the clamping piece 321 can be controlled, the operation is simplified, the fault rate is reduced, the speed is improved, and the movement accuracy of the clamping piece 321 is improved.

In some implementations, that the clamping piece 321 is controlled to move to a position above the receiving box 50 to reclaim the target piece includes:
the first movement assembly 21 is controlled to drive the second movement assembly 22 to move along the first direction, and the second movement assembly 22 is controlled to drive the connecting bracket 31 to move along the second direction, such that the clamping piece 321 moves to a position above the receiving box 50; and
the clamping piece 321 is controlled to switch to the release state for releasing the target piece, so as to reclaim the target piece.

In some implementations, referring to FIGs. 1 and 2, the tearing apparatus 100 includes a tearing platform 40 and a receiving box 50 arranged along the first direction. The tearing platform 40 is configured for placing the material 200. The receiving box 50 is configured for reclaiming the target piece.

The receiving box 50 is configured for reclaiming the target piece, which is conducive to realizing reclaiming of the target piece.

The tearing platform 40 is configured for placing the material 200, so that the clamping mechanism 30 tears off the target piece of the material 200.

The tearing apparatus 100 is provided with a tearing platform 40 and a receiving box 50 arranged along the first direction. After the clamping mechanism 30 tears off the target piece of the material 200, the first movement assembly 21 is controlled to drive the second movement assembly 22 to move along the first direction, and the second movement assembly 22 is controlled to drive the connecting bracket 31 to move along the second direction, such that the clamping piece 321 moves to a position above the receiving box 50, and the clamping piece 321 is controlled to switch to the release state to release the target piece, so as to reclaim the target piece.

It should be noted that the clamping piece 321 may move along the fourth direction, and after part of the release paper is torn off, the first movement assembly 21 is controlled to drive the second movement assembly 22 to move along the first direction, and at the same time, the second movement assembly 22 is controlled to drive the connecting bracket 31 to move along the second direction, such that the clamping piece 321 can move to a position above the receiving box 50. Alternatively, after the release paper is completely torn off, the first movement assembly 21 is controlled to drive the second movement assembly 22 to move along the first direction, and at the same time, the second movement assembly 22 is controlled to drive the connecting bracket 31 to move along the second direction, such that the clamping piece 321 can move to a position above the receiving box 50.

It can be understood that other mechanisms of the tearing apparatus 100 may be arranged between the receiving box 50 and the material 200. To prevent the clamping mechanism 30 from interfering with other mechanisms of the tearing apparatus 100 in the process of moving to a position above the receiving box 50, in the process that the clamping piece 321 is controlled to move to a position above the receiving box 50, the first movement assembly 21 is controlled to drive the second movement assembly 22 to move along the first direction, and at the same time, the second movement assembly 22 is also controlled to drive the connecting bracket 31 to move along the second direction.

The control system of the tearing apparatus 100 is composed of Arduino, PC, PLC (Programmable Logic Controller, programmable logic controller), a sensor, and the like. The signals collected by the sensors are transmitted to the PC program at first, the PC uploads action signals to the PLC according to the control logic, and the PLC controls actions of motors, air pumps, and the like. That is, the control of the clamping piece 321 of the tearing apparatus 100 in the XYZE directions can be realized by the program, which can solve the problem of inaccurate movement track caused by human factors and further influence on produce quality.

The foregoing embodiments are merely intended to describe the technical solutions of this application but not to limit this application. Although this application has been described in detail with reference to the foregoing embodiments, persons of ordinary skill in the art understand that modifications may still be made to the technical solutions described in the foregoing embodiments, or equivalent replacements may still be made to some technical features in the technical solutions. Such modifications and replacements do not make the essence of the corresponding technical solutions depart from the scope of the technical solutions of the embodiments of this application. In particular, the various technical features mentioned in the various embodiments may be combined in any manner as long as there is no structural conflict. This application is not limited to the specific embodiments disclosed herein, but includes all technical solutions falling within the scope of this application.

## Claims

1. A tearing apparatus, wherein the tearing apparatus comprises:
a mounting bracket;
a movement mechanism, wherein the movement mechanism comprises a first movement assembly and a second movement assembly, the first movement assembly is arranged on the mounting bracket, and the first movement assembly is configured to drive the second movement assembly to move along a first direction; and
a clamping mechanism, wherein the clamping mechanism comprises a connecting bracket and a clamping assembly, the second movement assembly is configured to drive the connecting bracket to move along a second direction, the clamping assembly is connected to the connecting bracket, a clamping piece of the clamping assembly is able to move along a third direction, and the clamping piece is configured to clamp a target piece of a material for tearing, wherein the first direction, the second direction, and the third direction intersect with one another; wherein
the clamping assembly is able to drive the clamping piece to move along a fourth direction relative to the connecting bracket, wherein a plane defined by the second direction and the third direction is parallel to the fourth direction, and the fourth direction is in oblique intersection with both the second direction and the third direction.

2. The tearing apparatus according to claim 1, wherein the first direction, the second direction, and the third direction are perpendicular to one another.

3. The tearing apparatus according to claim 1, wherein the clamping assembly comprises a first connecting piece connected to the connecting bracket and a first driving piece connected to the first connecting piece, the first driving piece extends along the fourth direction, and the first driving piece is configured to drive the clamping piece to move along the fourth direction.

4. The tearing apparatus according to claim 3, wherein the clamping assembly further comprises a first mounting plate connected to the first driving piece, and a first slide rail and a second driving piece arranged on the first mounting plate, wherein the first driving piece is configured to drive the first mounting plate to move along the fourth direction, and the first slide rail extends along the third direction, and the second driving piece is configured to drive the clamping piece to move along the first slide rail.

5. The tearing apparatus according to any one of claims 1 to 4, wherein the clamping assembly comprises a plurality of clamping pieces.

6. The tearing apparatus according to any one of claims 1 to 4, wherein the clamping piece comprises a clamping jaw and a third driving piece, and the third driving piece drives the clamping jaw to switch between a clamp state for clamping the target piece and a release state for releasing the target piece.

7. The tearing apparatus according to any one of claims 1 to 4, wherein the clamping mechanism comprises a fourth driving piece, the connecting bracket comprises a second connecting piece connected to the second movement assembly and a second mounting plate connected to the second connecting piece, a bottom surface of the second mounting plate is provided with a second slide rail extending along the first direction, and the fourth driving piece is configured to drive the clamping assembly to move along the second slide rail.

8. The tearing apparatus according to claim 7, wherein the clamping mechanism comprises a plurality of clamping assemblies, and the clamping assemblies are spaced apart on the second mounting plate along the first direction.

9. The tearing apparatus according to any one of claims 1 to 4, wherein the first movement assembly comprises a fifth driving piece and a third slide rail extending along the first direction, and the fifth driving piece drives the second movement assembly to move along the third slide rail.

10. The tearing apparatus according to claim 9, wherein the second movement assembly comprises a third connecting piece and a sixth driving piece, the third connecting piece comprises a connecting portion and a sliding portion connected to the connecting portion, the connecting portion is arranged at a side of the third slide rail, the sliding portion is in sliding fit with the third slide rail, and the sixth driving piece is arranged at a side, facing away from the sliding portion, of the connecting portion and is drivably connected with the connecting bracket.

11. The tearing apparatus according to any one of claims 1 to 4, wherein the tearing apparatus comprises a tearing platform and a receiving box arranged along the first direction, the tearing platform is configured for placing the material, and the receiving box is configured for reclaiming the target piece.

12. A tearing method for a tearing apparatus, wherein the tearing apparatus comprises a mounting bracket, a movement mechanism, a clamping mechanism, and a receiving box, wherein the movement mechanism comprises a first movement assembly and a second movement assembly, the first movement assembly is arranged on the mounting bracket, and the clamping mechanism comprises a connecting bracket and a clamping assembly connected to the connecting bracket; and
the tearing method comprises:
controlling the first movement assembly to drive the second movement assembly to move along a first direction, controlling the second movement assembly to drive the connecting bracket to move along a second direction, and controlling a clamping piece of the clamping assembly to move along a third direction, such that the clamping piece moves to a preset position, wherein the first direction, the second direction, and the third direction intersect with one another;
controlling the clamping piece to clamp a target piece of a material;
controlling the clamping piece to move along a fourth direction such that the clamping piece tears off the target piece, wherein a plane defined by the second direction and the third direction is parallel to the fourth direction, and the fourth direction is in oblique intersection with both the second direction and the third direction; and
controlling the clamping piece to move to a position above the receiving box to reclaim the target piece.

13. The tearing method according to claim 12, wherein the controlling the clamping piece to move to a position above the receiving box to reclaim the target piece comprises:
controlling the first movement assembly to drive the second movement assembly to move along the first direction, and controlling the second movement assembly to drive the connecting bracket to move along the second direction, such that the clamping piece moves to a position above the receiving box; and
controlling the clamping piece to switch to a release state for releasing the target piece to reclaim the target piece.
